(19)

**Europäisches Patentamt**

**European Patent Office**

**Office européen des brevets**

(11) **EP 4 462 326 A1**

(12) **EUROPEAN PATENT APPLICATION**
published in accordance with Art. 153(4) EPC

(43) Date of publication:
**13.11.2024 Bulletin 2024/46**

(21) Application number: **22925329.9**

(22) Date of filing: **10.02.2022**

(51) International Patent Classification (IPC):
**G06Q 10/06** (2023.01)

(52) Cooperative Patent Classification (CPC):
**G06Q 10/06**

(86) International application number:
**PCT/CN2022/075835**

(87) International publication number:
**WO 2023/150967 (17.08.2023 Gazette 2023/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Comac Beijing Aircraft Technology Research Institute**
**Beijing 102211 (CN)**
• **Commercial Aircraft Corporation Of China, Ltd.**
**Shanghai 200131 (CN)**

(72) Inventors:
• **DONG, Hao**
**Beijing 102211 (CN)**
• **TU, Linyan**
**Beijing 102211 (CN)**
• **YANG, Yifan**
**Beijing 102211 (CN)**
• **YUE, Runyu**
**Beijing 102211 (CN)**
• **LI, Jinheng**
**Beijing 102211 (CN)**

(74) Representative: **Gille Hrabal**
**Partnerschaftsgesellschaft mbB**
**Patentanwälte**
**Brucknerstraße 20**
**40593 Düsseldorf (DE)**

(54) **EQUIPMENT FAILURE RATE DETERMINING METHOD AND DEVICE, COMPUTER EQUIPMENT AND STORAGE MEDIUM**

(57) A method and an apparatus for determining a failure rate of the device, the computer device and the storage medium are provided, which relates to the field of aviation technology and determines a failure rate of each device in integrated modular architecture. An allocated failure rate of each device type in integrated modular architecture is determined according to a value of importance, a value of complexity, a value of maintenance, and a value of testing, of such device type. A device type, of which the allocated failure rate is less than a corresponding estimated failure rate, is determined to serve as a target device type. An updated failure rate of the target device type is determined according to the value of importance, the value of costs, the value of time, the value of quality, the allocated failure rate, and the corresponding estimated failure rate, of the target device type.

Determine an allocated failure rate of each device type in integrated modular architecture according to a value of importance, a value of complexity, a value of maintenance, and a value of testing, of such device type — S101

Determine a device type, of which the allocated failure rate is less than a corresponding estimated failure rate, in the integrated modular architecture to serve as a target device type — S102

Determine an updated failure rate of the target device type according to the value of importance, a value of costs, a value of time, a value of quality, the allocated failure rate, and the corresponding estimated failure rate, of the target device type — S103

**FIG. 1**

Description

## TECHNICAL FIELD

The present disclosure relates to the field of aviation technology, and in particular to a method and an apparatus for determining a failure rate of a device, a computer device, and a storage medium.

## BACKGROUND

At present, integrated modular architecture (IMA) has become a trend in development of the global aviation industry. Integration and modularization in avionic systems leads to significant reduction in volume and weight of avionics devices and higher operation efficiency. The integration and modularization also render a functional structure of the avionics systems more complex. Thereby, complexity and importance of the avionic devices are increasing.

A failure rate of each device in the avionics system influences not only dispatch reliability but also safety, to some degree, of an aircraft. Hence, the failure rate of each device in the system shall be well allocated and controlled when designing an aircraft model in practice. Otherwise, the dispatch rate and safety of the aircraft may be deeply affected, which results in poor competitiveness of the aircraft.

## SUMMARY

A method and an apparatus for determining a failure rate of a device, a computer device, and a storage medium are provided according to embodiments of the present disclosure. Thereby, the failure rate of each device in integrated modular architecture can be determined.

A method for determining a failure rate of a device is provided according to an embodiment of the present disclosure. The method comprises: determining an allocated failure rate of each device type in integrated modular architecture according to a value of importance, a value of complexity, a value of maintenance, and a value of testing, of said device type; determining a device type, of which the allocated failure rate is less than a corresponding estimated failure rate, in the integrated modular architecture to serve as a target device type; and determining an updated failure rate of the target device type according to the value of importance, a value of costs, a value of time, a value of quality, the allocated failure rate, and the corresponding estimated failure rate, of the target device type.

An apparatus for determining a failure rate of a device is further provided according to an embodiment of the present disclosure. The apparatus comprises: a first determining module, configured to determine an allocated failure rate of each device type in integrated modular architecture according to a value of importance, a value of complexity, a value of maintenance, and a value of testing, of said device type; and a second determining module, configured to determine a device type, of which the allocated failure rate is less than a corresponding estimated failure rate, in the integrated modular architecture to serve as a target device type; where the first determining module is further configured to determine an updated failure rate of the target device type according to the value of importance, a value of costs, a value of time, a value of quality, the allocated failure rate, and the respective estimated failure rate, of the target device type.

A computer device is further provided according to an embodiment of the present disclosure. The computer device comprises a memory, a processor, and a computer program stored in the memory and executable by the processor, and the processor when executing the computer program implements the foregoing method for determining the failure rate of the device.

A computer-readable storage medium is further provided according to an embodiment of the present disclosure. The computer-readable storage medium stores a computer program, and a processor when executing the computer program implements the foregoing method for determining the failure rate of the device.

Herein the method and the apparatus for determining the failure rate of the device, the computer device and the storage medium are provided. The allocated failure rate of each device type in the integrated modular architecture is determined according to the value of importance, the value of complexity, the value of maintenance, and the value of testing, of such device type. The device type, of which the allocated failure rate is less than a corresponding estimated failure rate, in the integrated modular architecture is determined to serve as the target device type. The updated failure rate of the target device type is determined according to the value of importance, the value of costs, the value of time, the value of quality, the allocated failure rate, and the corresponding estimated failure rate, of the target device type. Thereby, the failure rate of each device in the integrated modular architecture can be determined according to embodiments of the present disclosure.

## BRIEF DESCRIPTION OF THE DRAWINGS

Hereinafter drawings required for describing embodiments of the present disclosure will be briefly introduced in order to clarify technical solutions of the present disclosure. It is apparent that the drawings for the following description are only some embodiments of the present disclosure. Those skilled in the art can obtain other drawings on a basis of these drawings without exerting a creative effort.

FIG. 1 is a flowchart of a method for determining a failure rate of a device according to an embodiment of the present disclosure.

FIG. 2 is an architectural diagram of a coupled control system serving as integrated modular architecture according to an embodiment of the present disclosure.

FIG. 3 is a diagram for a reliability model of series-connected devices according to an embodiment of the present disclosure.

FIG. 4 is a principal block diagram of an apparatus for determining a failure rate of a device according to an embodiment of the present disclosure.

FIG. 5 is a schematic diagram of a computer device according to an embodiment of the present disclosure.

## DETAILED DESCRIPTION OF THE EMBODIMENTS

Hereinafter technical solutions in embodiments of the present disclosure are described clearly and completely in conjunction with the drawings in embodiments of the present closure. Apparently, the described embodiments are only some rather than all of the embodiments of the present disclosure. Any other embodiments obtained based on the embodiments of the present disclosure by those skilled in the art without any creative effort fall within the scope of protection of the present disclosure.

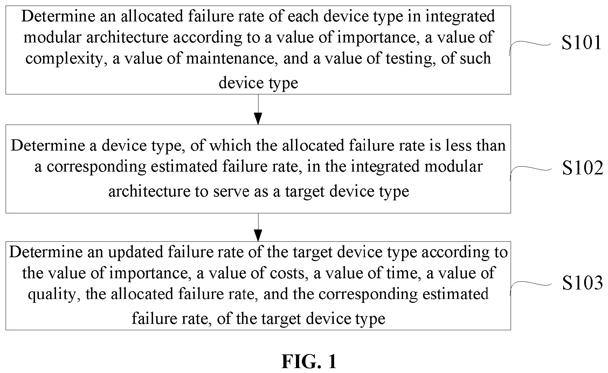

Reference is made to FIG. 1. A method for determining a failure rate of a device is provided according to an embodiment of the present disclosure. The method comprises following steps S101 to S103.

In step S101, an allocated failure rate of each device type in integrated modular architecture is determined according to a value of importance, a value of complexity, a value of maintenance, and a value of testing, of said device type.

Devices in the integrated modular architecture may include a general processing module, a power control module, a switch module, a remote data concentrator, a cabinet, a switch, or the like, which is not specifically limited herein.

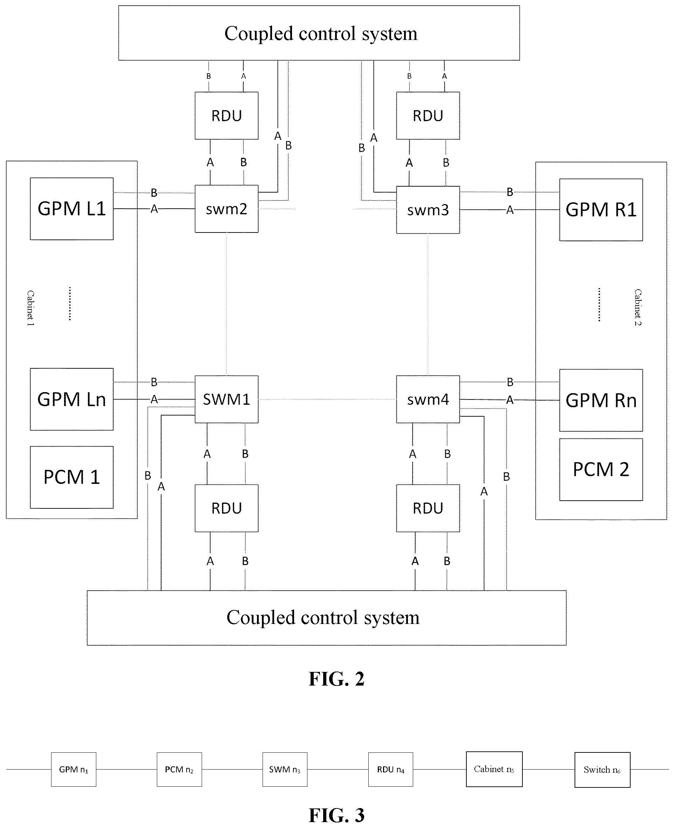

The integrated modular architecture is a coupled control system, and thus a relationship between the devices is complex. An architecture diagram is as shown in FIG. 2. The integrated modular architecture comprises the general process module (GSM), the power control module (PCM), the switch module (SWM), the remote data concentrator (RDU), the cabinet, and the switch. The GSM is mainly configured to achieve a function of data calculation in the system. The PCM is mainly configured to achieve functions such as power conversion, power output control, fan control, and the like in the system. The SWM is mainly configured to achieve a function of data forwarding and data transmission in the system. The RDU is mainly configured to achieve a function of data conversion in the system. The cabinet is mainly configured to achieve a function of cross-linking the devices in the system and providing a fan. The switch is mainly configured to switch components in the system between on and off.

The integrated modular architecture adopts a combination of series connection and parallel connection, different resident applications utilize different GPMs, and hence its analysis is complex and not convenient in engineering practice. Given that reliability parameters of the devices would be inputted when estimating reliability subsequently, in one embodiment, an IMA system is modeled to be a series model, that is, all parallel connections are reduced into a series connection. A corresponding reliability model may be as shown in FIG. 3.

The reliability $R_s$ of the IMA system is a product of those of individual devices, i.e.,

$$R_s = R_{n1} \cdot R_{n2} \cdot R_{n3} \cdot R_{n4} \cdot R_{n5} \cdot R_{n6}.$$

The reliability $R_{n_i}$ of each device is

$$R_{n_i} = \prod_{k=1}^{N} R_k \; (\mathrm{k} = 1,2,\dots,\mathrm{N}).$$

Allocated failure rate $\lambda$ is a fundamental parameter of the device reliability. The allocated failure rate is generally measured as a ratio of a total quantity of failures of a product to an accumulated operating time during a designated period under a designated condition. For example, a machine runs continuously for 1,000 days (the designated period) at 27 degrees (the designated condition) from today, and there are two failures in a total of 10,000 hours (the accumulated operating time). In such case, the allocated failure rate λ may be equal to 2/10000.

Mean time between failures (MTBF) is another fundamental parameter of the device reliability. The MTBF is typically measured for a repairable device and is obtained by dividing the accumulated operating time of a product by the total quantity of failures during the designated period under the designated condition. Hence, a relationship between the allocated failure rate λ and the MTBF is λ = 1/MTBF.

The devices in the integrated modular architecture are electronic devices. Thus, it is assumed that the failure rate of the device(s) is exponential, and the failure rate $R_s(t)$ is $R_s(t) = e^{-\lambda_s t}$.

According to $R_s = R_{n1} \cdot R_{n2} \cdot R_{n3} \cdot R_{n4} \cdot R_{n5} \cdot R_{n6}$, there is

$$R_s(t) = e^{-\lambda_s t} = e^{-\lambda_{n1} t} \cdot e^{-\lambda_{n2} t} \cdot e^{-\lambda_{n3} t} \cdot e^{-\lambda_{n4} t} \cdot e^{-\lambda_{n5} t} \cdot e^{-\lambda_{n6} t}$$

$$= e^{-(\lambda_{n1} + \lambda_{n2} + \lambda_{n3} + \lambda_{n4} + \lambda_{n5} + \lambda_{n6})t}.$$

Hence, a system failure rate $\lambda_s$ is

$$\lambda_s = \lambda_{n1} + \lambda_{n2} + \lambda_{n3} + \lambda_{n4} + \lambda_{n5} + \lambda_{n6}.$$

The allocated failure rate $\lambda_{n_i}$ of each device type is

$$\lambda_{n_i} = \sum_{k=1}^{N} \lambda_k \ (i = 1,2,3,4,5,6) \ (k = 1,2,\dots,\text{N}).$$

N is a quantity of devices belongs to a respective device type, and i represents the respective device type. In this embodiment, a quantity of device types may be equal to 6, that is, there are six device types which are the general processing module, the power control module, the switching module, the remote data concentrator, the cabinet, and the switch.

In an embodiment, the step S101 comprises steps S1011 to S1014.

In step S1011, a first score of each device type is determined according to the value of importance, the value of complexity, the value of maintenance, and the value of testing, of such device type.

In an embodiment, the value of importance, the value of complexity, the value of maintenance, and the value of testing may be evaluated within a scoring range of 1 to 10. The value of importance is configured to reflect a degree of importance of corresponding devices. The value of importance may be estimated and scored according to a development assurance level, and the development assurance level ranges from level A to level E. Levels A to E are evaluated from 10 to 1, where levels A, B, C, D, and E are scored to be 10, 8, 6, 4, and 2, respectively. That is, the value of importance decreases by 2 for each level step. The value of importance under the same level may be further measured on a basis of a difficulty degree of an actual project. The value of complexity is configured to reflect complexity of the corresponding devices is evaluated on a basis of a quantity of the devices. The quantity corresponding to the device type having the most devices may serve as a benchmark for unified measurement. The larger the quantity of devices is, the lower the value of complexity is. In case of the identical quantities, the higher the development assurance level is, the lower the value of complexity is. The value of maintenance is evaluated on a basis of an estimated maintenance time. The longer the maintenance time is, the lower the value of maintenance is estimated. The value of testing is evaluated on a basis of time consumed by fault detection. The longer time the detection consumes, the lower the value of testing is evaluated.

In an embodiment, the value of importance, the value of complexity, the value of maintenance, and the value of testing may be first determined. For example, they are as listed in Table 1. The values in each row are summed to obtain the first score of the respective device type. As listed in Table 1, the first score of the GPM is 38, and the first score of the SWM is 35.

**Table 1**

| Factor<br>Device type | Value of importance | Value of complexity | Value of maintenance | Value of testing | First score |
|---|---|---|---|---|---|
| GPM | 10 | 8 | 10 | 10 | 38 |

(continued)

| Factor | Value of importance | Value of complexity | Value of maintenance | Value of testing | First score |
| --- | --- | --- | --- | --- | --- |
| Device type | | | | | |
| SWM | 10 | 5 | 10 | 10 | 35 |
| RDU | 10 | 10 | 10 | 10 | 40 |
| Cabinet | 8 | 2 | 2 | 5 | 17 |
| Switch | 4 | 3 | 6 | 5 | 18 |
| PCM | 8 | 5 | 10 | 6 | 29 |

In step S 1012, the first scores of all device types are summed up to obtain a first score of the system.

As shown in Table 1, the first scores of all device types are summed to obtain the first score of the system to be 38 + 35 + 40 + 17 + 18 + 29 = 177.

In step S1013, a ratio of the first score of each device type to the first score of the system is calculated to obtain a first allocation coefficient of each device type.

As shown in Table 1, the first scores of the device types are denoted as $M_1$ to $M_6$, and a system failure rate allocated to the IMA system is $\lambda_s$ or is converted from $MTBF_s$. There is

$$M = \sum_{i=1}^{6} M_i.$$

Hence, the first allocation coefficient is

$$\alpha_i = \frac{M_i}{M} (i = 1,2 \dots,6).$$

In step S 1014, a product of the first allocation coefficient of each device type and the allocated system failure rate is calculated to determine the allocated failure rate of such device type.

In an embodiment, the allocated failure rate for each device type as listed in Table 1 may be expressed as

$$\lambda_{n_i} = \alpha_i \cdot \lambda_s (i = 1,2 \dots,6).$$

After the step S 1014, an allocated failure rate of each device belonging to each device type may be further determined according to a ratio of the allocated failure rate of such device type and a quantity of devices belonging to such device type.

In an embodiment, the allocated failure rate of each device is calculated through

$$\lambda_k = \frac{\lambda_{n_i}}{N} (k = 1,2 \dots, N).$$

N is the quantity of devices in the corresponding device type. $\lambda_k$ is the allocated failure rate of a specific device.

There is

$$R(t) = e^{-\lambda t}.$$

Multiplication of the failure rates concerns addition of the exponential parts, that is, addition of the failure rates. Since the failure rate of each specific device is identical, the allocated failure rate of the specific device is a mean on a basis the allocated failure rate of the corresponding device type.

In step S102, a device type, of which the allocated failure rate is less than a corresponding estimated failure rate, in the integrated modular architecture is determined to serve as a target device type.

The estimated failure rate of each device may be $\lambda_{ki\_est}(i = 1,2 \dots,6)$, which is provided by a supplier or provided during a process of a project. In such case, the estimated failure rate for each device type is:

$$\lambda_{n_{i}\_\text{est}} = n_i \cdot \lambda_{ki\_\text{est}}$$

$\lambda_{n_{i}\_\text{est}}$ is the estimated failure rate of a certain device type, $n_i$ is the quantity of devices in such device type, and $\lambda_{ki\_\text{est}}$ is the estimated failure rate of each device belonging to such device type.

Accordingly, the estimated failure rate $\lambda_{s\_\text{est}}$ of the IMA system is

$$\lambda_{s\_\text{est}} = \sum_{i=1}^{6} \lambda_{n_{i}\_\text{est}}.$$

In an embodiment, the allocated failure rate of each device type is compared with the estimated failure rate of such device type. In a case that $\lambda_{n_{i}\_\text{est}} \leq \lambda_{ni}$, such device type is excluded from optimization (i.e., it is not necessary to determine its failure rate again). In a case that $\lambda_{n_{i}\_\text{est}} > \lambda_{ni}$, its failure rate needs to be optimized. That is, the device type having the allocated failure rate less than the corresponding estimated failure rate is determined to be the target device type (i.e., the device type required to be optimized).

It is assumed that a quantity of device types requiring determining the failure rate is equal to L (L ≤ 6). The allocated failure rates of these device types may be order from small to large as $\lambda'_{n_1}$ to $\lambda'_{n_L}$. Accordingly, failure rates of target devices may be sequentially updated according to the order.

In step S103, an updated failure rate of the target device type is determined according to the value of importance, a value of costs, a value of time, a value of quality, the allocated failure rate, and the corresponding estimated failure rate, of the target device type.

The value of importance, the value of costs, the value of time, the value of quality, of the target device type, may be evaluated within a scoring range of 1 to 10. The device type(s) that require no further determination of the failure rate is scored to be 0. In an embodiment, the value of importance may be evaluated on a basis of a development assurance level, and the development assurance level ranges from level A to level E. The value of importance decreases by 2 for each level step, and the value of importance under the same level may be further measured on a basis of a difficulty degree of an actual project. The value of costs is evaluated on a basis of estimated costs required to reduce the failure rate. The higher the costs are, the lower the value of costs is. The value of time is evaluated on a basis of time required to improve reliability. The longer the time is, the lower the value of time is. The value of quality is estimated on a basis of whether improving the reliability would increase a quality of the system. The more the quality increases, the lower the value of quality is.

In an embodiment, the step S103 comprises steps S1031 to S1034.

In step S1031, a second score of each target device type is determined according to the value of importance, the value of costs, the value of time, and the value of quality, of such target device type.

For example, the target device types comprise the GPM, the SWM, the RDU, the cabinets, the switches, and the PCM, of which the values are as listed in Table 2.

Table 2

| Factor<br>Device type | Value of importance | Value of costs | Value of time | Value of quality | Second score |
|---|---|---|---|---|---|
| GPM | 10 | 8 | 10 | 10 | $M'_1$ |
| SWM | 10 | 5 | 10 | 10 | $M'_2$ |
| RDU | 10 | 10 | 10 | 10 | $M'_3$ |
| Cabinet | 8 | 2 | 2 | 5 | $M'_4$ |
| Switch | 4 | 3 | 6 | 5 | $M'_5$ |
| PCM | 8 | 5 | 10 | 6 | $M'_6$ |

For example, the second score $M'_1$ of the GPM is 38.

In step S1032, the second scores of all target device types are summed to obtain a second score of the system.

As listed in Table 2, the second scores of all target device types are $M_1^{'}$ to $M_6^{'}$, and hence the second score of the system is

$$M^{'} = \sum_{i=1}^{L} M_i^{'}.$$

In step S1033, a ratio of the second score of each target device type to the second score of the system is calculated to obtain a second allocation coefficient of such target device type.

On a basis of Table 2, the second allocation coefficient is

$$\alpha_i^{'} = \frac{M_i^{'}}{M^{'}} (i = 1,2 \dots, L).$$

In step S1034, the updated failure rate of each target device type is determined according to the second allocation coefficient, the allocated failure rate, and the estimated failure rate, of such target device type.

In an embodiment, the step S1034 comprises a following step.

The updated failure rate of the target device type is determined through:

$$\lambda_{n_{i\_upd}} = \lambda_{s\_est} \cdot \left(1 - \alpha_i^{'} \cdot \Delta\lambda\right)(i = 1,2 \dots, L).$$

$\lambda_{n_{i\_upd}}$ is the updated failure rate of the target device type, $\lambda_{s\_est}$ is the estimated failure rate of the target device type, and $\alpha_i^{'}$ is the second allocation coefficient of the target device type. $\Delta\lambda$ is a difference between the estimated failure rate of the system and the allocated system failure rate, and L is the quantity of target device types. There is

$$\Delta\lambda = \lambda_{s\_est} - \lambda_s.$$

After the step S1034, an updated ratio of the updated failure rate of each target device type to a quantity of devices belonging to such target device type may be determined, such that the allocated failure rate of each device belonging to such target device type can be determined.

In an embodiment, the allocated failure rate of each device in each target device type is calculated through:

$$\lambda_{k\_upd} = \frac{\lambda_{n_{i\_upd}}}{N} (k = 1,2 \dots, N)$$

N is the quantity of devices belonging to such target device type. $\lambda_{k\_upd}$ is the allocated failure rate of a specific device.

Herein the method for determining the failure rate of the device, the computer device and the storage medium is provided. The allocated failure rate of each device type in the integrated modular architecture is determined according to the value of importance, the value of complexity, the value of maintenance, and the value of testing, of such device type. The device type, of which the allocated failure rate is less than a corresponding estimated failure rate, in the integrated modular architecture is determined to serve as the target device type. The updated failure rate of the target device type is determined according to the value of importance, the value of costs, the value of time, the value of quality, the allocated failure rate, and the corresponding estimated failure rate, of the target device type. Thereby, the failure rate of each device in the integrated modular architecture can be determined according to embodiments of the present disclosure.

In the foregoing embodiments, magnitude of a sequential number of each step does not indicate an order of executing the steps. The order of executing the steps shall be determined according to their functions and an internal logic. The sequential number does not constitute any limitation on implementation of embodiments of the present disclosure.

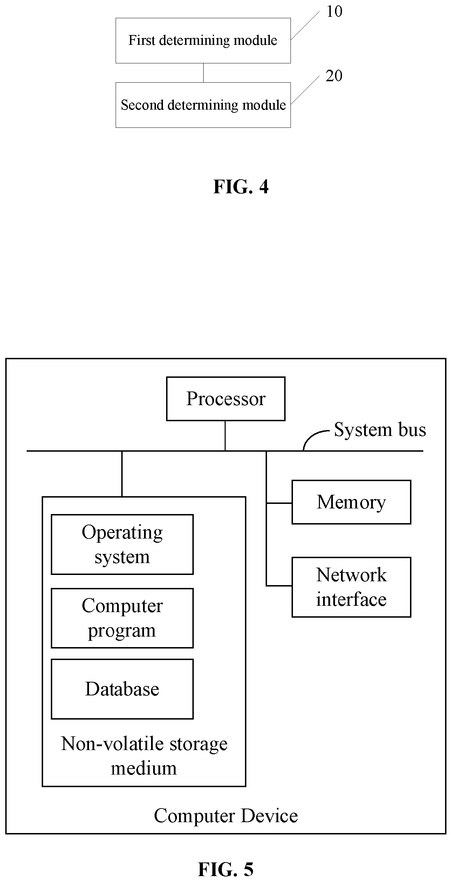

An apparatus for determining a failure rate of a device is provided according to an embodiment of the present disclosure. The apparatus embodiments and the foregoing method embodiments are in one-to-one correspondence. As shown in FIG. 4, the apparatus comprises a first determining module 10 and a second determining module 20. Hereinafter details of each functional module is illustrated.

The first determining module 10 is configured to determine an allocated failure rate of each device type in integrated modular architecture according to a value of importance, a value of complexity, a value of maintenance, and a value of testing, of said device type.

The second determining module 20 is configured to determine a device type, of which the allocated failure rate is less than a corresponding estimated failure rate, in the integrated modular architecture to serve as a target device type.

The first determining module 10 is further configured to determine an updated failure rate of the target device type according to the value of importance, a value of costs, a value of time, a value of quality, the allocated failure rate, and the respective estimated failure rate, of the target device type.

In an embodiment, the first determining module 10 is specifically configured to: determine a first score of each device type according to the value of importance, the value of complexity, the value of maintenance, and the value of testing, of said device type; sum up the first scores of all device types to obtain a first score of a system; calculate a ratio of the first score of each device type to the first score of the system to obtain a first allocation coefficient of each device type; and calculate a product of the first allocation coefficient of each device type and the allocated system failure rate to determine the allocated failure rate of said device type.

In an embodiment, the first determining module 10 is configured to: determine an allocated failure rate of each device belonging to each device type according to a ratio of the allocated failure rate of said device type and a quantity of devices belonging to said device type.

In an embodiment, the first determining module 10 is specifically configured to: determine a second score of each target device type according to the value of importance, the value of costs, the value of time, and the value of quality, of said target device type; sum up the second scores of all target device types to obtain a second score of a system; calculate a ratio of the second score of each target device type to the second score of the system to obtain a second allocation coefficient of said target device type; and determine the updated failure rate of each target device type according to the second allocation coefficient, the allocated failure rate, and the estimated failure rate, of said target device type.

In an embodiment, the first determining module 10 is specifically configured to determine the updated failure rate of the target device type through:

$$\lambda_{n_{i_{upd}}} = \lambda_{S_{est}} \cdot \left(1 - \alpha_i' \cdot \Delta\lambda\right) (i = 1,2\ldots,L),$$

where $\lambda_{n_{i\_upd}}$ is the updated failure rate of the target device type, $\lambda_{s\_est}$ is the estimated failure rate of the target device type, $\alpha_i'$ is the second allocation coefficient of the target device type, $\Delta\lambda$ is a difference between an estimated failure rate of the system and an allocated system failure rate, and L is a quantity of target device types.

In an embodiment, the first determining module 10 is specifically configured to determine an updated ratio of the updated failure rate of each target device type to a quantity of devices belonging to said target device type to determine an allocated failure rate of each device belonging to said target device type.

In an embodiment, device types in the integrated modular architecture comprises at least: a general processing module, a power control module, a switching module, a remote data concentrator, a cabinet, and a switch.

Specific features of the apparatus may refer to those of the foregoing method for determining the failure rate of the device and would not be repeated herein. Each module in the apparatus may be implemented in whole or in part through software, hardware, or a combination of the two. Each module may be embedded in or independent from a processor of a computer device as hardware, or each module may be stored in a memory of the computer device as software to facilitate the processor invoking such module to perform an operation of such module.

A computer device is provided according to an embodiment of the present disclosure. The computer device may be a server, and its internal structure diagram may be as shown in FIG. 5. The computer apparatus comprises a processor, a memory, a network interface, and a database, which are connected via a system bus. The processor is configured to provide computing and control capabilities. The memory comprises a non-volatile storage medium and an internal memory. The non-volatile storage medium stores an operating system, a computer program, and the database. The internal memory provides an environment for operation of the operating system and the computer program in the non-volatile storage medium. The network interface is configured to communicate with an external terminal via a network connection. The computer program when executed by the processor is capable of implementing the method of determining the failure rate of the device.

A computer device is provided according to an embodiment of the present disclosure. The computer device comprises a memory, a processor, and a computer program stored on the memory and executable by the processor. The processor when executing the computer program implements following steps.

An allocated failure rate of each device type in the integrated modular architecture is determined according to a value of importance, a value of complexity, a value of maintenance, and a value of testing, of such device type.

A device type, of which the allocated failure rate is less than a corresponding estimated failure rate, in the integrated modular architecture is determined to serve as a target device type.

An updated failure rate of the target device type is determined according to the value of importance, a value of costs, a value of time, a value of quality, the allocated failure rate, and the corresponding estimated failure rate, of the target device type.

A computer-readable storage medium is provided according to an embodiment of the present disclosure. A computer program is stored on the computer-readable storage medium, and a processor when executing the computer program implements following steps.

An allocated failure rate of each device type in the integrated modular architecture is determined according to a value of importance, a value of complexity, a value of maintenance, and a value of testing, of such device type.

A device type, of which the allocated failure rate is less than a corresponding estimated failure rate, in the integrated modular architecture is determined to serve as a target device type.

An updated failure rate of the target device type is determined according to the value of importance, a value of costs, a value of time, a value of quality, the allocated failure rate, and the corresponding estimated failure rate, of the target device type.

Those skilled in the art may understand that all or a part of a process in the method(s) illustrated in the foregoing embodiments may be implemented through instructing relevant hardware through a computer program, and the computer program may be stored in a non-volatile computer-readable storage medium. The computer program when executed may implement a flow as illustrated in each method embodiment. Herein any reference to a memory, a storage, a database, or another medium used in any embodiment of the present disclosure may include a non-volatile memory and/or a volatile memory. The non-volatile memory may include a read-only memory (ROM), a programmable ROM (PROM), an electrically programmable ROM (EPROM), an electrically erasable programmable ROM (EEPROM), or a flash memory. The volatile memory may include a random-access memory (RAM) or an external cache memory. Illustratively rather than restrictively, the RAM may be in a variety of forms, such as a static RAM (SRAM), a dynamic RAM (DRAM), a synchronous DRAM (SDRAM), a dual data rate SDRAM (DDRSDRAM), an enhanced SDRAM (ESDRAM), a synchlink DRAM (SLDRAM), a memory bus (Rambus) direct RAM (RDRAM), a direct memory bus dynamic RAM (DRDRAM), and a memory bus dynamic RAM (RDRAM), or the like.

Those skilled in the art may clearly appreciate that for the sake of conciseness and brevity of description, the division of the aforementioned functional units and/or modules is merely exemplary. In practice, the aforementioned functional units and/or modules may be assigned to different functional units or different modules on requirement. That is, an internal structure of the apparatus may be divided into different functional units or modules to complete all or a part of the aforementioned functions.

The above embodiments are only intended for illustrating rather than limiting technical solutions of the present disclosure. Although the present disclosure has been described in detail with reference to the foregoing embodiments, those skilled in the art may appreciate that the technical solutions recorded in the foregoing embodiments may be modified or some of the technical features in the solutions may be replaced, and these modifications or replacements shall fall within the scope of protection of the present disclosure as long as they do not make an essence of the corresponding technical solutions depart from a spirit and a scope of the original technical solutions in the embodiments of the present disclosure.

## Claims

1. A method for determining a failure rate of a device, comprising:

   determining an allocated failure rate of each device type in integrated modular architecture according to a value of importance, a value of complexity, a value of maintenance, and a value of testing, of said device type;
   determining a device type, of which the allocated failure rate is less than a corresponding estimated failure rate, in the integrated modular architecture to serve as a target device type; and
   determining an updated failure rate of the target device type according to the value of importance, a value of costs, a value of time, a value of quality, the allocated failure rate, and the corresponding estimated failure rate, of the target device type.

2. The method according to claim 1, wherein determining the allocated failure rate of each device type in integrated modular architecture according to the value of importance, the value of complexity, the value of maintenance, and the value of testing, of said device type, comprising:

   determining a first score of each device type according to the value of importance, the value of complexity, the value of maintenance, and the value of testing, of said device type;

summing up the first scores of all device types to obtain a first score of a system;

calculating a ratio of the first score of each device type to the first score of the system to obtain a first allocation coefficient of each device type; and

calculating a product of the first allocation coefficient of each device type and the allocated system failure rate to determine the allocated failure rate of said device type.

3. The method according to claim 2, wherein after calculating the product of the first allocation coefficient of each device type and the allocated system failure rate to determine the allocated failure rate of said device type, the method further comprises:

determining an allocated failure rate of each device belonging to each device type according to a ratio of the allocated failure rate of said device type and a quantity of devices belonging to such device type.

4. The method according to any one of claims 1 to 3, wherein determining the updated failure rate of the target device type according to the value of importance, the value of costs, the value of time, the value of quality, the allocated failure rate, and the corresponding estimated failure rate, of the target device type comprises:

determining a second score of each target device type according to the value of importance, the value of costs, the value of time, and the value of quality, of said target device type;

summing up the second scores of all target device types to obtain a second score of a system;

calculating a ratio of the second score of each target device type to the second score of the system to obtain a second allocation coefficient of said target device type; and

determining the updated failure rate of each target device type according to the second allocation coefficient, the allocated failure rate, and the estimated failure rate, of said target device type.

5. The method according to claim 4, wherein determining the updated failure rate of each target device type according to the second allocation coefficient, the allocated failure rate, and the estimated failure rate, of said target device type comprises:

determining the updated failure rate of the target device type through:

$$\lambda_{n_{i_{upd}}} = \lambda_{s_{est}} \cdot \left(1 - \alpha_i' \cdot \Delta\lambda\right) (i = 1,2 \dots, L),$$

wherein $\lambda_{n_{i\_upd}}$ is the updated failure rate of the target device type, $\lambda_{s\_est}$ is the estimated failure rate of the target device type, $\alpha_i'$ is the second allocation coefficient of the target device type, $\Delta\lambda$ is a difference between an estimated failure rate of the system and an allocated system failure rate, and L is a quantity of target device types.

6. The method according to claim 4, wherein determining the updated failure rate of each target device type according to the second allocation coefficient, the allocated failure rate, and the estimated failure rate, of said target device type, the method further comprises:

determine an updated ratio of the updated failure rate of each target device type to a quantity of devices belonging to said target device type to determine an allocated failure rate of each device belonging to said target device type.

7. The method of claim 1, wherein device types in the integrated modular architecture comprises at least:

a general processing module, a power control module, a switching module, a remote data concentrator, a cabinet, and a switch.

8. An apparatus for determining a failure rate of a device, comprising:

a first determining module, configured to determine an allocated failure rate of each device type in integrated modular architecture according to a value of importance, a value of complexity, a value of maintenance, and a value of testing, of said device type; and

a second determining module, configured to determine a device type, of which the allocated failure rate is less than a corresponding estimated failure rate, in the integrated modular architecture to serve as a target device type;

wherein the first determining module is further configured to determine an updated failure rate of the target device type according to the value of importance, a value of costs, a value of time, a value of quality, the allocated failure rate, and the respective estimated failure rate, of the target device type.

9. A computer device, comprising:

> a memory,
> a processor, and
> a computer program stored in the memory and executable by the processor,
> wherein the processor when executing the computer program implements the method according to any one of claims 1 to 7.

10. A computer-readable storage medium, storing a computer program, wherein:
a processor when executing the computer program implements the method according to any one of claims 1 to 7.

Determine an allocated failure rate of each device type in integrated modular architecture according to a value of importance, a value of complexity, a value of maintenance, and a value of testing, of such device type　　　S101

Determine a device type, of which the allocated failure rate is less than a corresponding estimated failure rate, in the integrated modular architecture to serve as a target device type　　　S102

Determine an updated failure rate of the target device type according to the value of importance, a value of costs, a value of time, a value of quality, the allocated failure rate, and the corresponding estimated failure rate, of the target device type　　　S103

**FIG. 1**

**FIG. 2**

**FIG. 3**

**FIG. 4**

**FIG. 5**

## INTERNATIONAL SEARCH REPORT

| International application No. |
| --- |
| **PCT/CN2022/075835** |

**A. CLASSIFICATION OF SUBJECT MATTER**

G06Q 10/06(2012.01)i

According to International Patent Classification (IPC) or to both national classification and IPC

**B. FIELDS SEARCHED**

Minimum documentation searched (classification system followed by classification symbols)

G06Q; G06F

Documentation searched other than minimum documentation to the extent that such documents are included in the fields searched

Electronic data base consulted during the international search (name of data base and, where practicable, search terms used)

WPABSC; CNTXT; DWPI; ENTXTC; CNKI: 失效率, 失效概率, 可靠性, 可靠度, 分配, 允许, 调整, 改变, 重置, 重新确定, 再分配, 重分配, 故障时间间隔, 成本, 经济, reliability, distribut+, allocat+, rectif+, updat+, adjust+, reset+, re-allocat+, re-distribut+, MTBF, cost, finacial

**C. DOCUMENTS CONSIDERED TO BE RELEVANT**

| Category* | Citation of document, with indication, where appropriate, of the relevant passages | Relevant to claim No. |
| --- | --- | --- |
| X | CN 107809112 A (BEIHANG UNIVERSITY et al.) 16 March 2018 (2018-03-16) description, paragraphs 81-129 | 1-8, 10-11 |
| X | CN 109031224 A (LEIHUA ELECTRONIC TECHNOLOGY RESEARCH INSTITUTE, AVIC) 18 December 2018 (2018-12-18) description, paragraphs 128-203 | 1-8, 10-11 |
| X | 陈兴球等 (CHEN, Xingqiu et al.). "一种可靠性再分配改进算法在某型航空自导深弹中的 应用 (Application of an Improved Reliability Reallocation Algorithm in a Kind of Aviation Homing Depth Charge)" 水雷战与舰船防护 (Mine Warfare & Ship Self-Defence), Vol. 20, No. 03, 15 August 2012 (2012-08-15), pages 85-87 | 1-8, 10-11 |
| A | CN 109062245 A (HANGZHOU DIANZI UNIVERSITY) 21 December 2018 (2018-12-21) entire document | 1-8, 10-11 |
| A | US 2020134516 A1 (HYOSUNG HEAVY INDUSTRIES CORP.) 30 April 2020 (2020-04-30) entire document | 1-8, 10-11 |

☑ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 July 2022** | **22 July 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/075835**

**C. DOCUMENTS CONSIDERED TO BE RELEVANT**

| Category* | Citation of document, with indication, where appropriate, of the relevant passages | Relevant to claim No. |
|---|---|---|
| A | US 7580956 B1 (SYMANTEC OPERATING CORP.) 25 August 2009 (2009-08-25)<br>entire document | 1-8, 10-11 |
| A | EP 0375435 A2 (THIOKOL CORP.) 27 June 1990 (1990-06-27)<br>entire document | 1-8, 10-11 |

Form PCT/ISA/210 (second sheet) (January 2015)

**INTERNATIONAL SEARCH REPORT**
**Information on patent family members**

International application No.

**PCT/CN2022/075835**

| Patent document cited in search report | | | Publication date (day/month/year) | Patent family member(s) | | | Publication date (day/month/year) |
|---|---|---|---|---|---|---|---|
| CN | 107809112 | A | 16 March 2018 | None | | | |
| CN | 109031224 | A | 18 December 2018 | None | | | |
| CN | 109062245 | A | 21 December 2018 | CN | 109062245 | B | 01 June 2021 |
| US | 2020134516 | A1 | 30 April 2020 | WO | 2018199658 | A1 | 01 November 2018 |
| | | | | KR | 20180121217 | A | 07 November 2018 |
| | | | | KR | 101943410 | B1 | 29 January 2019 |
| | | | | IN | 201917042371 | A | 13 December 2019 |
| US | 7580956 | B1 | 25 August 2009 | None | | | |
| EP | 0375435 | A2 | 27 June 1990 | JP | H0319755 | A | 28 January 1991 |
| | | | | CA | 2004024 | A1 | 22 June 1990 |
| | | | | EP | 0375435 | A3 | 22 January 1992 |

Form PCT/ISA/210 (patent family annex) (January 2015)